# FASCICULE DE BREVET EUROPEEN

(11) **EP 2 104 634 B1**
(45) Date de publication et mention de la délivrance du brevet: **18.05.2011**
(21) Numéro de dépôt: 07870300.6
(22) Date de dépôt: 19.11.2007
(51) Int. Cl.: B65D 41/48, B29C 45/00

(54) **BOUCHON POUR UN COL DE RECIPIENT ET PROCEDE DE FABRICATION D'UN TEL BOUCHON**
KAPPE FÜR DEN HALS EINES BEHÄLTERS UND VERFAHREN ZUR HERSTELLUNG EINER SOLCHEN KAPPE
CAP FOR THE NECK OF A CONTAINER AND METHOD FOR PRODUCING ONE SUCH CAP

(30) Priorité: 20.11.2006 FR 0610139
(43) Date de publication de la demande: 30.09.2009
(73) Titulaire: Tetra Laval Holdings & Finance SA, 1009 Pully (CH)
(72) Inventeur: IACOPI, Stéphane, 01600 Saint Bernard (FR); GUERIN, Fabrice, 69006 Lyon (FR)
(74) Mandataire: Grand, Guillaume
(86) Numéro de dépôt international: PCT/FR2007/001894
(87) Numéro de publication internationale: WO 2008/071860

(56) Documents cités:
- WO-A-97/27037
- WO-A-2005/056413
- WO-A1-97/27037
- WO-A1-2005/056413
- GB-A- 2 164 028
- GB-A- 2 164 028
- US-A- 4 796 771
- US-A- 4 796 771

## Description

La présente invention concerne un procédé de fabrication d'un bouchon pour un col de récipient.

L'invention a trait, de manière générale, aux bouchons comprenant une jupe qui entoure le col d'un récipient et dont une partie inférieure, lorsqu'on considère que ce col s'étend verticalement avec son buvant dirigé vers le haut, est destinée à demeurer autour du col après la première ouverture du bouchon, tandis que le reste de la jupe, c'est-à-dire sa partie supérieure, est prévue amovible par rapport au col, tout en étant initialement reliée à la partie inférieure non amovible de la jupe par des pontets frangibles, répartis suivant la périphérie de la jupe et à même d'être rompus lors de la première ouverture du bouchon. La ligne d'affaiblissement constituée de ces pontets sert de témoin de cette première ouverture, à l'attention des utilisateurs.

L'invention s'intéresse plus particulièrement aux bouchons dont la partie de jupe supérieure est munie d'un onglet extérieur permettant de dégager manuellement cette partie de jupe de la partie de jupe inférieure non amovible. Typiquement, ce genre d'onglet ne court que sur une portion périphérique de la jupe, située du côté du bouchon destiné à être dirigé vers l'utilisateur, autrement dit située du côté que l'on qualifie généralement de côté avant du bouchon. En pratique, lorsque l'utilisateur souhaite ouvrir le bouchon, il utilise un de ses doigts pour appliquer sur l'onglet un effort dirigé vers le haut, de manière à dégager la partie de jupe supérieure par rapport au col et à l'éloigner de la partie de jupe inférieure. Un exemple de ce genre de bouchon consiste en des bouchons dits « snap », c'est-à-dire les bouchons à même d'être clipsés de manière amovible autour du col du récipient, tels que celui divulgué dans US-B-6,260,723.

Lors de la première ouverture de ce genre de bouchon, l'utilisateur doit développer un effort significatif pour dégager du col la partie de jupe amovible, tout en rompant au moins la plupart des pontets reliant initialement cette partie de jupe amovible à la partie de jupe non amovible.

GB-A-2 164 028 divulgue un bouchon moulé du type défini ci-dessus, avec en particulier une ligne d'affaiblissement qui, suivant la périphérie du bouchon, est constituée soit d'une paroi mince ininterrompue, soit d'une succession de pontets, sauf à l'aplomb de son onglet de sollicitation où est prévu un espace libre de toute matière. La présence de cet espace libre est présentée comme essentiel dans ce document, dans le sens où cet espace permet d'amorcer la déchirure de la ligne d'affaiblissement lors de la première ouverture du bouchon. Ainsi, lors de sa première ouverture, le bouchon n'oppose à l'utilisateur aucune résistance dans un premier temps, puis une forte résistance pour rompre soit la paroi mince ininterrompue précitée, soit les pontets précités. L'absence initiale de résistance fait courir le risque qu'une sollicitation intempestive ou accidentelle de l'onglet provoque l'ouverture du bouchon, ainsi que sa fragilisation, sans pour autant que l'utilisateur ultérieur ne s'en aperçoive en raison de la présence quasi-intacte soit de la paroi mince, soit des pontets. Autrement dit, les risques de sabotage de ce bouchon sont réels. En outre, la présence de l'espace libre juste à l'aplomb de l'onglet pose des problèmes de moulage du bouchon : en l'absence d'un lien entre les parties haute et basse du bouchon à l'aplomb de l'onglet, la circulation de matière, notamment plastique, de part et d'autre de cet espace libre est plus difficile à réaliser. Le moule de fabrication du bouchon est donc plus complexe, ce qui limite significativement les possibilités d'aménagement du bouchon pour des raisons de coût.

Le but de la présente invention est de fabriquer un bouchon du type évoqué ci-dessus, qui soit plus facile à ouvrir la première fois, tout en limitant les risques de pouvoir écarter la partie de jupe amovible de la partie de jupe non amovible sans rupture de la ligne d'affaiblissement.

A cet effet, l'invention a pour objet deux procédés de fabrication d'un bouchon pour un col de récipient, tels que respectivement définis aux revendications 1 et 5.

En pratique, le bouchon fabriqué selon l'invention est destiné à être utilisé de manière que son onglet soit situé du côté du bouchon dirigé vers l'utilisateur, autrement dit du côté que l'on qualifie généralement de côté avant du bouchon. Selon l'invention, le ou les pontets avant sont moins épais que les autres pontets, notamment que les pontets arrière. De la sorte, l'effort nécessaire pour rompre les pontets avant est non nul, ce qui limite les risques d'une ouverture accidentelle ainsi que d'un sabotage du bouchon, mais cet effort reste modéré, ce qui limite l'effort total que doit produire l'utilisateur pour dégager du col la partie de jupe amovible pour la première fois, par exemple pour la déclipser. En outre, comme l'utilisateur doit solliciter l'onglet à l'avant du bouchon pour ouvrir ce dernier et comme la résistance induite par les pontets est moins importante à l'avant du bouchon que pour le reste du bouchon, l'entraînement de la partie de jupe amovible est en quelque sorte guidé de l'avant vers l'arrière. Une fois que les pontets avant sont rompus et que le mouvement d'ouverture du bouchon est ainsi amorcé à l'avant du bouchon, l'utilisateur poursuit naturellement l'entraînement de la partie de jupe amovible en vue d'accéder plus complètement à l'intérieur du col, en provoquant la rupture des autres pontets, notamment des pontets latéraux puis des pontets arrière.

En pratique, l'invention vise des pontets avant dont l'épaisseur est la plus petite possible, tout en tenant compte des contraintes liées à la matière constituant la jupe et au moulage de cette jupe, dans le sens où cette matière peut s'écouler de part et d'autre de la ligne d'affaiblissement, via le ou les pontets avant entre autres. L'effet de rupture prioritaire des pontets avant par rapport aux autres pontets est cependant sensible dès qu'une différence d'épaisseur entre les pontets avant et les autres est d'au moins 20%.

Des caractéristiques avantageuses du procédé suivant l'invention, prises isolément ou suivant toutes les combinaisons techniquement possibles, sont énoncées aux revendications dépendantes 2 à 4 et 6 à 10.

L'invention sera mieux comprise à la lecture de la description qui va suivre, donnée uniquement à titre d'exemple et faite en se référant aux dessins sur lesquels :
- la figure 1 est une coupe longitudinale d'un bouchon selon l'invention, représenté avant sa mise en place autour d'un col de récipient ;
- la figure 2 est une coupe selon le plan II-II de la figure 1 ;
- la figure 3 est une vue analogue à la figure 1, dans le même plan de coupe, après la mise en place du bouchon autour d'un col de récipient ;
- la figure 4 est une vue selon le plan IV-IV de la figure 3, la partie gauche de la figure 4 correspondant à une vue en élévation tandis que sa partie droite correspond à une coupe dans le plan IV-IV ;
- les figures 5 et 6 sont des coupes, respectivement longitudinale et transversale, d'un noyau de moulage utilisé pour fabriquer le bouchon de la figure 1, les plans de coupe de ces figures étant respectivement indiqués par les lignes V-V à la figure 6 et VI-VI à la figure 5 ;
- la figure 7 est une vue analogue à la figure 1, illustrant un second mode de réalisation d'un bouchon conforme à l'invention ;
- la figure 8 est une coupe selon le plan VIII-VIII de la figure 7 ; et
- les figures 9 et 10 sont des coupes, respectivement longitudinale et transversale, d'un noyau de moulage utilisé pour fabriquer le bouchon de la figure 7, les plans de coupe de ces figures étant respectivement indiqués par les lignes IX-IX à la figure 10 et XI-XI à la figure 9.

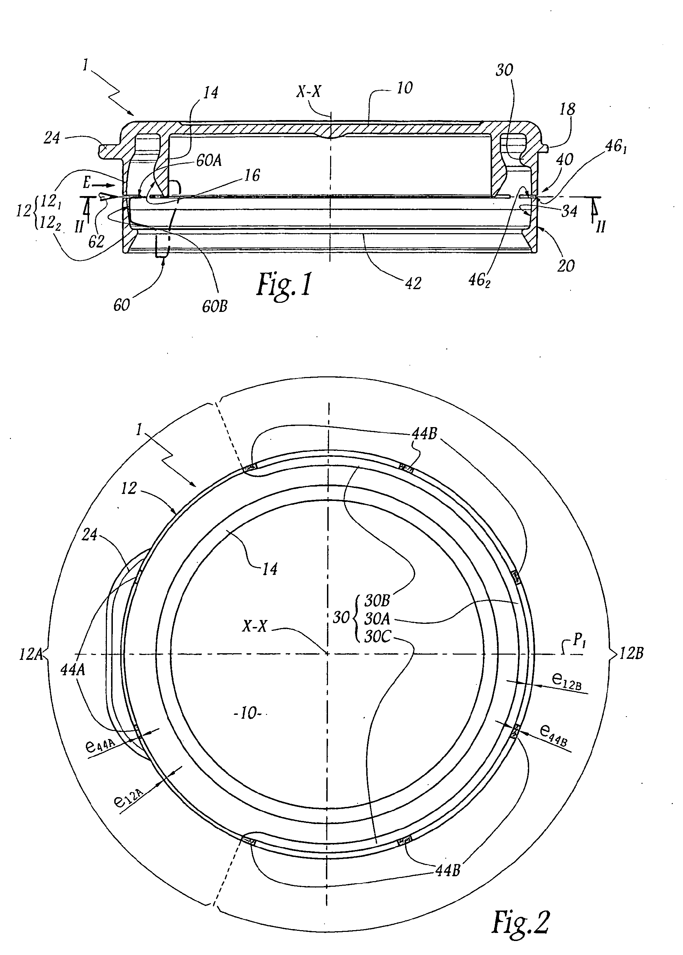

Sur les figures 1 à 4 est représenté un bouchon 1 adapté pour être clipsé de manière amovible sur un col 2 d'un récipient, le bouchon 1 étant généralement qualifié de « bouchon snap » ou « bouchon snapé ». En pratique, le col 2 est soit venu de matière avec le reste du récipient, notamment lorsque ce dernier est une bouteille en verre ou en matière plastique, soit adapté pour être solidarisé à demeure sur une paroi du récipient, au niveau d'une ouverture traversant cette paroi.

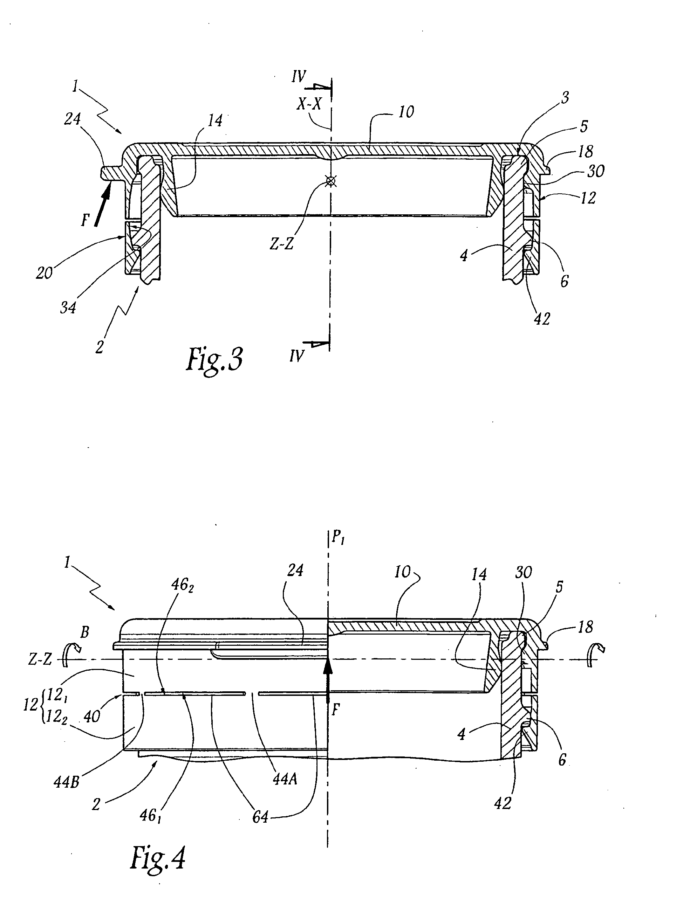

Le bouchon 1 et le col 2 présentent des formes respectives globalement tubulaires, dont les axes longitudinaux centraux sont sensiblement confondus, sous la référence X-X, lorsque le bouchon est clispsé sur le col, comme sur les figures 3 et 4. Par commodité, la suite de la description est orientée en considérant que les termes « supérieur » et « haut » correspondent à une direction globalement parallèle à l'axe X-X et allant du corps du récipient vers son col 2, c'est-à-dire une direction dirigée vers la partie haute de toutes les figures sauf la figure 2, tandis que les termes « inférieur » et « bas » correspondent à une direction opposée.

Le col 2 comporte un corps 4 globalement cylindrique à base circulaire d'axe X-X. A son extrémité haute, ce corps 4 délimite un buvant 3 au niveau duquel le liquide contenu dans le récipient est destiné à être déversé. Sur la face extérieure du corps 4, le col 2 comporte, à son extrémité supérieure, un bord 5 et, dans sa partie courante, un bossage 6, ce bord et ce bossage s'étendant tous deux radialement vers l'extérieur depuis le corps.

Le bouchon 1 est ouvert à son extrémité inférieure et fermé à son extrémité supérieure par une paroi de fond 10, à la périphérie extérieure de laquelle s'étend axialement vers le bas une jupe tubulaire 12 centrée sur l'axe X-X. Le bouchon comporte également une lèvre 14 qui s'étend axialement vers le bas depuis la paroi de fond 10, de manière centrée sur l'axe X-X, à l'intérieur de la jupe externe 12. Lorsque le bouchon est clipsé sur le col 2 comme sur les figures 3 et 4, la paroi de fond 10 s'étend au-dessus et en travers de ce col, tandis que la jupe 12 entoure extérieurement le corps 4 et la lèvre 14 est appuyée de manière étanche contre la face intérieure de ce corps.

A son extrémité supérieure, la jupe 12 est munie d'une collerette périphérique extérieure 18 qui forme extérieurement la liaison avec la paroi de fond 10. Cette collerette s'étend radialement vers l'extérieur par rapport à la paroi principale tubulaire de la jupe, dont la surface extérieure, référencée 20, est cylindrique à base circulaire, centrée sur l'axe X-X. La collerette 18 s'étend sur toute la périphérie extérieure de la jupe 12, en présentant une largeur de débordement vers l'extérieur constante suivant la périphérie de la jupe, excepté sur une portion de jupe restreinte 12A considérée par la suite comme le côté avant du bouchon 1, ce côté étant destiné en service à être dirigé vers l'utilisateur. En effet, à l'avant du bouchon, qui est vu de face dans la partie gauche de la figure 4, la jupe 12 est munie, dans sa partie haute, d'un onglet extérieur 24 qui s'étend radialement en saillie vers l'extérieur depuis la surface 20, en prolongeant ainsi vers l'extérieur la portion avant de la collerette. Dans la forme de réalisation avantageuse envisagée aux figures, l'onglet 24 présente un plan vertical de symétrie, noté P₁ aux figures 2 et 4 et correspondant au plan de coupe des figures 1 et 3, étant remarqué que ce plan P₁ est un plan diamétral longitudinal de la jupe 12.

Egalement dans sa partie haute, la jupe 12 est intérieurement munie d'un clips 30 se présentant sous la forme d'un renflement de matière qui s'étend radialement vers l'intérieur de la paroi principale de la jupe 12 et au-dessous duquel cette paroi de la jupe présente une surface intérieure 34 cylindrique d'axe X-X. Le clips présente une surface convexe, qui est reliée à la paroi de fond 10 en formant un évidement de réception du bord 5 du col 2. Comme représenté sur les figures 3 et 4, le clipsage du bouchon 1 consiste à mettre en prise cette surface convexe avec l'extrémité inférieure du bord 5, ce dernier étant alors reçu dans l'évidement précité.

Comme visible à la figure 2, le clips 30 se présente sous la forme d'une bande de clipsage, qui court sur la périphérie intérieure de la jupe, en étant interrompue du côté avant du bouchon. Ainsi, le clips 30 est constitué, d'une part, d'une portion arrière 30A, qui s'étend de part et d'autre du plan P₁ suivant la périphérie de la jupe, et, d'autre part, de deux portions latérales 30B et 30C diamétralement opposées, qui s'étendent, suivant la périphérie de la jupe, de part et d'autre d'un plan diamétral longitudinal perpendiculaire au plan P₁, en étant ici avantageusement symétriques par rapport au plan P₁.

Du côté avant du bouchon, la portion périphérique 12A de la jupe, qui relie les extrémités avant respectives des portions latérales de clips 30B et 30C, et sur la partie médiane de laquelle s'étend l'onglet 24, est quant à elle dépourvue de tout moyen de clipsage, dans le sens où elle est prévu pour ne pas entrer en prise avec le bord 5 du col 2 lorsque le bouchon 1 est clipsé.

Lors du premier déclipsage du bouchon 1, la jupe 12 est adaptée pour se séparer en deux parties distinctes, à savoir une partie supérieure 12₁, venue de matière avec la paroi de fond 10, et une partie inférieure 12₂ reliée initialement à la partie supérieure 12₁ au niveau d'une ligne d'affaiblissement 40 située axialement dans la partie courante de la jupe. La partie de jupe 12₁ est destinée à être dégagée en totalité du col 2, de sorte que cette partie 12₁ porte extérieurement l'onglet 24 et intérieurement le clips 30. La partie de jupe 12₂ est, quant à elle, destinée à demeurer autour du col 2. A cet effet, cette partie 12₂ est munie intérieurement d'une palette 42 s'étendant radialement en saillie vers l'intérieur depuis la surface intérieure 34 de la jupe 12, en courant sur toute la périphérie de la jupe. Cette palette s'étend axialement en dessous du bossage 6 du col 2 et est adaptée, lorsque le bouchon 1 est soulevé pour la première fois, pour buter axialement contre ce bossage.

La ligne d'affaiblissement 40 comprend des pontets frangibles, au nombre de huit dans l'exemple considéré aux figures, répartis régulièrement suivant la périphérie de la jupe 12, en étant ici avantageusement symétriques par rapport au plan P₁, de sorte que, comme représenté sur la figure 2, deux de ces pontets, référencés 44A, sont situés dans la portion de jupe avant 12A, tandis que les six autres pontets, référencés 44B, sont situés en dehors de cette portion 12A. Au niveau de la ligne d'affaiblissement 40, la paroi de la jupe 12 est interrompue entre les pontets : comme visible aux figures 1 et 4, le chant d'extrémité inférieur 46₁ de la partie de jupe 12₁ est, entre deux pontets successifs, axialement distant du chant d'extrémité supérieure 46₂ de la partie de jupe 12₂, tandis qu'au niveau de chacun des pontets 44A et 44B, ces chants d'extrémité 46₁ et 46₂ sont reliés l'un à l'autre suivant la direction de l'axe X-X, par continuité de matière.

Comme visible aux figures 1 et 2, la dimension radiale, c'est-à-dire l'épaisseur, de la paroi de la jupe 12 varie suivant la périphérie de la jupe, au niveau de la ligne d'affaiblissement 40. Dans sa portion avant 12A, la jupe présente une épaisseur e_{12A} sensiblement constante, qui est plus petite que l'épaisseur e_{12B} de la portion de jupe 12B constituant le reste de la jupe. De la sorte, comme l'épaisseur de chaque pontet est égale à l'épaisseur des chants d'extrémité 46₁ et 46₂ que ce pontet relie, les pontets avant 44A présentent une épaisseur e_{44A} égale à l'épaisseur e_{12A} et inférieure à l'épaisseur e_{44B} des pontets 44B, qui est égale à l'épaisseur e_{12B}.

Pour fabriquer le bouchon 1, on moule une matière plastique semi-rigide, telle que du polypropylène ou du polyéthylène. Ce moulage est prévu pour former, d'un seul tenant, la paroi de fond 10, la jupe 12 et la lèvre 14. Le moulage de cette pièce est facile à réaliser, y compris en ce qui concerne la zone intérieure la plus radialement saillante que constitue le clips 30 puisque ce dernier ne s'étend pas sur toute la périphérie de la jupe, de sorte que cette dernière garde une certaine souplesse, notamment transversale. En particulier, l'utilisation de tiroirs de moulage n'est pas nécessaire.

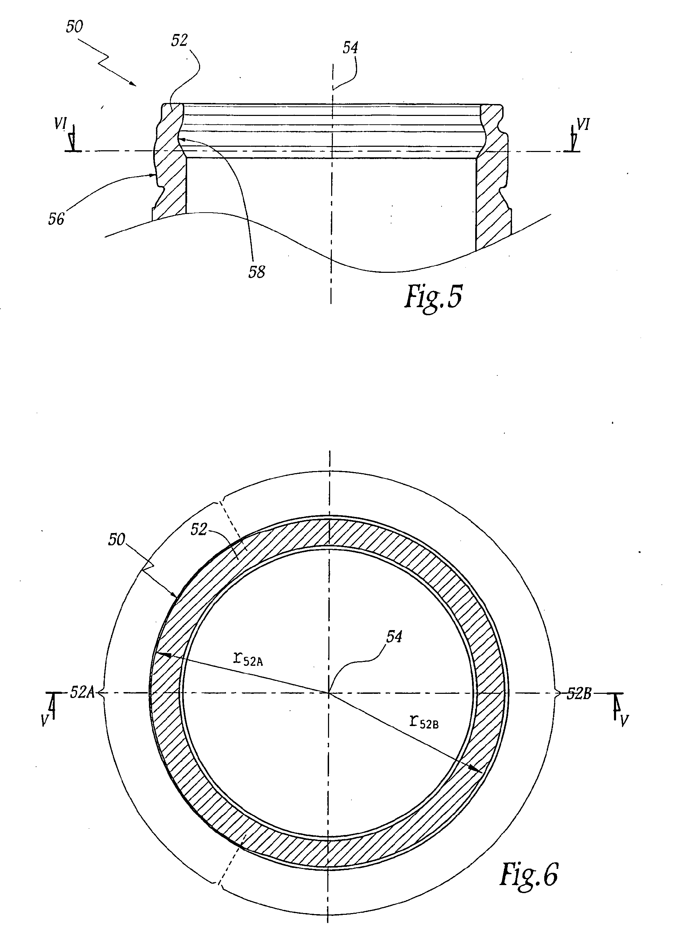

En pratique, on utilise avantageusement un noyau de moulage 50 représenté sur les figures 5 et 6. Ce noyau comprend un corps tubulaire 52 d'axe central longitudinal 54 et dont la face extérieure 56 est conformée pour permettre le moulage de la face intérieure de la jupe 12, notamment le moulage du clips 30 et de la palette 42, tandis que la face intérieure 58 du corps 52 est conformée pour permettre le moulage de la face de la lèvre 14 dirigée vers la jupe 12. Au niveau axial du corps 52 correspondant au niveau axial de formation ultérieure de la ligne d'affaiblissement 40, le corps 52 présente, en coupe transversale comme à la figure 6, un contour périphérique extérieur qui n'est pas rigoureusement circulaire, mais dont le rayon de courbure varie : dans la portion périphérique 52A du corps 52 prévue pour mouler la portion de jupe avant 12A, ce rayon de courbure, référencé r_{52A}, est plus grand que le rayon de courbure r_{52B} de la portion 52B constituant le reste du corps 52. En introduisant le corps 52 dans un moule à section transversale rigoureusement circulaire, de manière centrée sur l'axe 54, on comprend que la jupe 12 est, au niveau axial précité du corps 52, moulée avec sa portion avant 12A moins épaisse que le reste de jupe 12B, étant remarqué que le contour transversal de la surface intérieure 34 de la jupe n'est pas rigoureusement circulaire, mais correspond au contour extérieur précité du corps 52.

Pour démouler le bouchon 1, on utilise avantageusement l'épaulement formant transition entre la surface extérieure 20 de la jupe 12 et la collerette 18, en exerçant un effort de soulèvement vers le haut de cette collerette. Par déformation élastique de la matière, le clips 30 est alors aisément dégagé du moule.

Après avoir démoulé le bouchon 1, un mandrin 60, représenté en traits mixtes uniquement dans la partie gauche de la figure 1, est introduit axialement par le bas dans le bouchon, en vue de réaliser la ligne d'affaiblissement 40. Ce mandrin est avantageusement introduit jusqu'à ce que sa face supérieure 60A vienne buter contre l'extrémité intérieure de la lèvre 14, tandis que sa surface périphérique 60A prend appui contre la surface inférieure 34 de la jupe 12.

Une lame 62 est alors utilisée pour découper, depuis l'extérieur du bouchon 1, des entailles 64 à travers la paroi de la jupe 12, la lame 62 étant déplacée radialement par rapport à l'axe X-X, comme indiqué par la flèche E, pour traverser la paroi de jupe de part en part. Avantageusement, la lame 62 est appliquée juste au-dessus de la surface supérieure 60A du mandrin 60, de sorte que les entailles 64 sont situées axialement en regard de l'extrémité inférieure de la lèvre 14. De cette façon, la partie de jupe 12₂ présente une dimension axiale significative par rapport à la partie de jupe 12₁, à savoir du même ordre de grandeur dans l'exemple considéré sur les figures, ce qui implique que la partie de jupe 12₂ constitue un témoin du premier déclipsage du bouchon 1, facilement repérable par l'utilisateur. On comprend que le fait de pouvoir découper les entailles 64 en regard de l'extrémité inférieure de la lèvre 14 tient au fait que, d'une part, la paroi de jupe présente, à ce niveau axial, une épaisseur modérée et que, d'autre part, cette jupe présente une souplesse suffisante pour permettre l'introduction du mandrin 60 assez haut à l'intérieur du bouchon.

La lame 62 est déplacée de manière à découper la jupe 12 sur toute sa périphérie, sauf en une succession de portions restreintes, réparties suivant la périphérie de la jupe, au niveau desquelles de la matière subsiste pour relier les parties de jupe 12₁ et 12₂, en constituant ainsi les pontets 44A et 44B. A cet effet, la lame 62 présente un profil cannelé et/ou est manipulée suivant des mouvements adéquats par rapport à la jupe.

L'opération de découpe réalisée au moyen de la lame 62 est prévue pour obtenir le positionnement angulaire souhaité des pontets avant 44A et des autres pontets 44B. En outre, eu égard au moulage de la paroi principale de la jupe 12 au moyen du noyau 50 et au fait que les actions de découpe sont exclusivement radiales par rapport à cette paroi, on comprend que les différents pontets 44A et 44B sont situés radialement entre les surfaces extérieure 20 et intérieure 34 de la paroi de jupe, c'est-à-dire, pour tenir compte de l'interruption de matière entre les parties de jupe 12₁ et 12₂ au niveau des entailles 64, entre, d'une part, l'enveloppe délimitée par les surfaces extérieures des parties de jupe 12₁ et 12₂ et, d'autre part, l'enveloppe délimitée par les surfaces intérieures des parties de jupe 12₁ et 12₂.

Le bouchon 1 peut alors être rapporté autour du col 2. Pour déclipser ce bouchon, l'utilisateur agit sur la face inférieure de l'onglet 24, en cherchant à soulever cet onglet vers le haut. En pratique, l'utilisateur utilise au moins l'un de ses doigts pour exercer un effort F suivant une direction parallèle à l'axe X-X ou, plus fréquemment, légèrement incliné par rapport à cet axe, comme indiqué aux figures 3 et 4. Dans la mesure où la portion de jupe avant 12A n'interfère pas avec le bord 5 du col 2, puisque la surface avant de cette portion 12A est radialement distante du bord 5, l'application de l'effort de poussée F entraîne le soulèvement vers le haut de la portion avant 12A par rapport au reste de jupe 12B, par élasticité de la jupe. En pratique, la jupe présente ainsi une souplesse suffisante à l'avant pour une valeur du secteur angulaire de la portion 12A d'au moins 90°. La portion avant de la palette 42 vient alors buter contre la portion correspondante du bossage 6 du col 2, de sorte que les pontets avant 44A, à la différence des autres pontets 44B, subissent un effort significatif tendant à les rompre. Comme ces pontets avant 44A sont moins épais que les autres pontets 44B, ils se rompent rapidement, c'est-à-dire sans que l'utilisateur n'est à développer un effort F de forte intensité.

Avantageusement, le soulèvement de la portion avant 12A de la jupe 12 est guidé par le clips 30. En effet, les portions de clips latérales 30B et 30C forment alors, par coopération avec le bord 5, des pivots d'articulation de cette portion de jupe 12A par rapport au reste de jupe 12B : la ligne imaginaire Z-Z reliant diamétralement les portions de clips 30B et 30C constituent, d'un point de vue cinématique, un axe de basculement de la portion de jupe 12A vis-à-vis du col 2, comme indiqué par la flèche B sur les figures 3 et 4.

En poursuivant l'application de l'effort de poussée F, l'utilisateur déforme progressivement tout le côté avant du bouchon 1, jusqu'à provoquer le dégagement des portions de clips latérales 30B et 30C : la portion de clip arrière 30A fait alors office d'articulation, par coopération de sa surface convexe et de l'extrémité inférieure du bord 5, qui glissent l'une contre l'autre selon un mouvement global de basculement autour d'un axe imaginaire, sensiblement parallèle à l'axe Z-Z et s'étendant du côté arrière du bouchon. La portion de clip arrière 30A stabilise ainsi le dégagement des portions de clips latérales 30B et 30C, jusqu'à ce que ces dernières soient amenées au-dessus du bord 5, le bouchon étant ensuite dans une configuration permettant le dégagement transversal de la portion de clips arrière 30A vis-à-vis du bord 5.

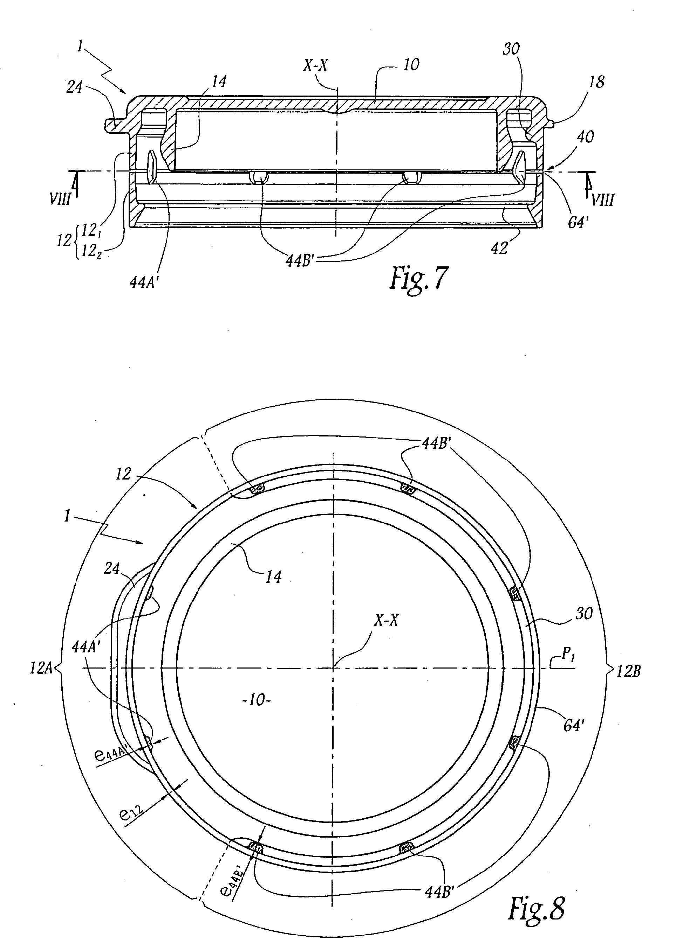

Sur les figures 7 et 8 est représentée une variante de réalisation du bouchon 1, dont les composants communs au bouchon des figures 1 à 4 portent, par commodité, les mêmes références. Cette variante se distingue du mode de réalisation des figures 1 à 4 par la structure des pontets frangibles de la ligne d'affaiblissement 40. En effet, à la différence des pontets 44A et 44B reliant les chants d'extrémité 46₁ et 46₂ des parties de jupe 12₁ et 12₂ dans le prolongement rectiligne de ces parties de jupe suivant la verticale, les pontets 44A' et 44B' de cette variante relient, par l'intérieur de la jupe 12, les surfaces intérieures des parties de jupe 12₁ et 12₂. Pour ce faire, ces pontets 44A' et 44B' sont, suivant l'axe X-X, plus longs que l'espacement axial entre les chants d'extrémité en vis-à-vis 46₁ et 46₂, les extrémités longitudinales de chacun de ces pontets étant en saillie radiale vers l'intérieur par rapport aux surfaces intérieures des parties de jupe 12₁ et 12₂. Bien entendu, pour limiter l'intensité nécessaire à la rupture des pontets avant 44A' par rapport celle relative aux pontets arrière 44B', l'épaisseur e_{44A'} des pontets avant est plus petite que l'épaisseur e_{44B'} des pontets arrière.

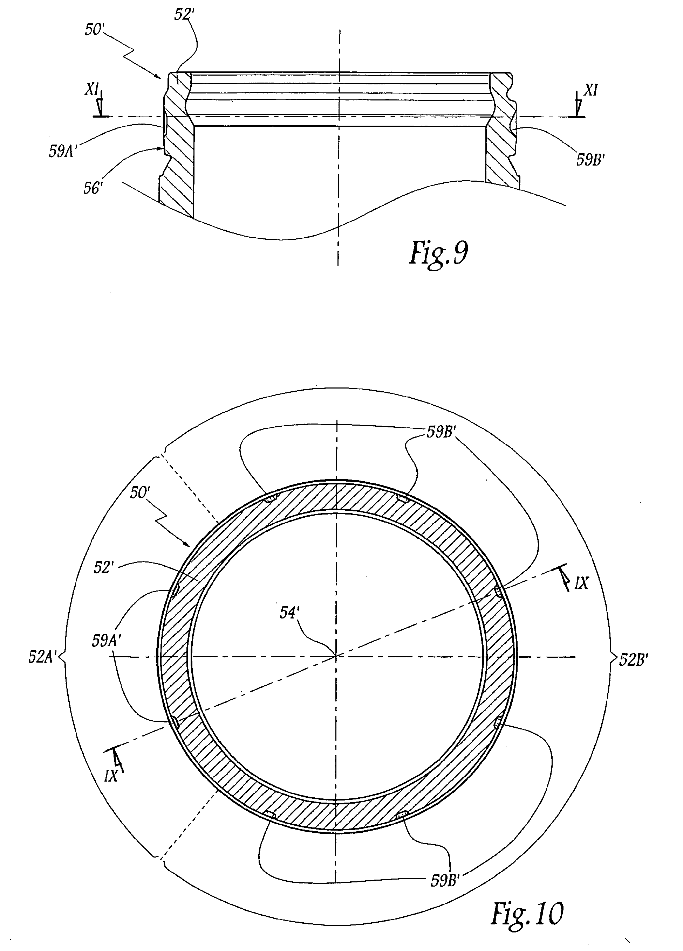

Pour fabriquer cette variante du bouchon 1, on utilise de préférence le noyau 50' représenté sur les figures 9 et 10. Ce noyau 50' se distingue du noyau 50 des figures 5 et 6 par le fait que, au niveau axial de son corps tubulaire 52' correspondant au niveau axial de formation ultérieure de la ligne d'affaiblissement 40, d'une part, le profil extérieur de sa section transversale est rigoureusement circulaire et, d'autre part, sa face extérieure 56' est creusée de cavités réparties suivant la périphérie du corps 52'. Dans la portion avant 52A' du corps 52', les cavités, référencées 59A', sont radialement moins profondes que les cavités 59B' du reste 52B' de ce corps, de sorte que, lors du moulage de la jupe 12, les cavités 59A' moulent des renflements moins épais que les renflements moulés par les cavités 59B'. En outre, on comprend que l'utilisation du noyau 50' permet de mouler la jupe 12 avec une épaisseur de paroi e₁₂ constante suivant sa périphérie, au niveau axial correspondant au niveau de formation de la ligne d'affaiblissement 40.

Après démoulage, pour obtenir cette ligne d'affaiblissement 40, on découpe, sur toute la périphérie de la jupe 12, une unique entaille 64' qui traverse la paroi principale de la jupe de part en part. A cet effet, on utilise notamment une lame de découpe appliquée radialement à la jupe 12, depuis l'extérieur de cette jupe. L'opération de découpe est prévue pour ne pas découper les renflements de matière moulés par les cavités 59A' et 59B', de manière que ces renflements forment alors les pontets frangibles 44A' et 44B'. La ligne d'affaiblissement 40 est ainsi plus facile à réaliser que celle des bouchons des figures 1 à 4, puisque la lame de découpe, ou le matériel de découpe analogue, n'a pas à être manipulée suivant des mouvements élaborés et/ou n'a pas à présenter un profil intérieur cannelé.

Divers aménagements et variantes aux deux modes de réalisation du bouchon 1 décrits ci-dessus sont par ailleurs envisageables. A titre d'exemples :
- en plus de présenter une épaisseur moindre que celle des pontets 44B ou 44B', les pontets avant 44A ou 44A' peuvent présenter une dimension périphérique plus petite que celle des pontets 44B ou 44B', ce qui renforce l'effet de rupture prioritaire pour les pontets avant par rapport aux autres pontets ; pour ce faire, la lame 62 est déplacée de manière adéquate par rapport à la jupe 12, suivant sa périphérie, lors des opérations de découpe des entailles 64 ou bien les cavités 59A' présentent une dimension périphérique plus petite que celle des autres cavités 59B' du noyau 50' ;
- le nombre de pontets n'est pas limité à huit, comme dans les exemples considérés aux figures ; ce nombre peut être plus grand ou plus petit, du moment, d'une part, qu'au moins un pontet soit situé dans la portion de jupe avant 12A et, d'autre part, qu'au moins un autre pontet soit situé en dehors de cette portion ; et/ou
- les moyens de fixation amovible de la partie de jupe 12₁ au col 2 peuvent présenter d'autres formes que le clips 30 ; par exemple, un clips s'étendant sur toute la périphérie intérieure de la jupe peut être prévue, ou bien, plutôt que de prévoir une fixation par clipsage, la partie de jupe 12₁ peut être immobilisée de manière amovible par rapport au col 2 par l'intermédiaire d'une base rapportée à demeure autour du col 2, étant remarqué que ces diverses formes de fixation amovible envisageables doivent être prévues pour être sollicitées au moyen de l'onglet 24, en permettant le dégagement du bouchon par rapport au col par déformation du côté avant de ce bouchon par rapport au reste du bouchon.

## Revendications

1. Procédé de fabrication d'un bouchon (1) pour un col de récipient (2), dans lequel on moule une jupe tubulaire allongée (12) apte à entourer le col et munie, à la fois, de moyens (42) de retenue autour du col et d'un onglet extérieur de sollicitation (24) s'étendant sur seulement une portion périphérique (12A) de la jupe et permettant d'ouvrir le bouchon, dans lequel
au moins à un niveau longitudinal de la jupe (12), on moule la paroi de la jupe de manière que la dimension radiale (e_{12A}) de sa portion périphérique (12A) associée à l'onglet (24) est plus petite que la dimension radiale (e_{12B}) du reste de jupe (12B), **caractérisé en ce que**,
audit niveau longitudinal de la jupe, on découpe ensuite des entailles (64) à travers la paroi de la jupe de manière à délimiter, suivant la périphérie de la jupe, des pontets frangibles dont au moins un (44A) est situé dans la portion périphérique (12A) de la jupe associée à l'onglet tandis qu'au moins un autre (44B) des pontets est situé en dehors de cette portion, lesquels pontets relient, avant la première ouverture du bouchon, une partie de jupe non amovible (12₂), munie des moyens de retenue (42), et une partie de jupe amovible (12₁) munie de l'onglet (24).

2. Procédé suivant la revendication 1, **caractérisé en ce que**, lors du moulage de la jupe (12), on utilise un noyau de moulage (50) dont une portion (52A), utilisée pour mouler la portion périphérique (12A) de la jupe (12) associée à l'onglet (24), délimite, dans un plan de coupe transversale correspondant audit niveau longitudinal de la jupe, un contour périphérique extérieur présentant un rayon de courbure (r_{52A}) plus grand que le rayon de courbure (r_{52B}) du reste (52B) du noyau.

3. Procédé suivant l'une des revendications 1 ou 2, **caractérisé en ce que** les pontet (44A, 44B) sont situés radialement entre l'enveloppe (20) délimitée par les surfaces extérieures des parties de jupe amovible (12₁) et non amovible (12₂) et l'enveloppe (34) délimitée par les surfaces intérieures des parties de jupe amovible et non amovible, en reliant l'un à l'autre des chants d'extrémité en vis-à-vis (46₁, 46₂) des parties de jupe amovible et non amovible suivant la direction longitudinale (X-X) de la jupe (12) avant la première ouverture du bouchon (1).

4. Procédé suivant la revendication 3, **caractérisé en ce que**, au moins de part et d'autre de la ligne d'affaiblissement (40), la dimension radiale (e_{12A}, e_{12B}) de la jupe (12) varie suivant sa périphérie, en étant égale, au niveau de chaque pontet (44A, 44B), à la dimension radiale (e_{44A}, e_{44B}) de ce pontet.

5. Procédé de fabrication d'un bouchon (1) pour un col de récipient (2), dans lequel on moule une jupe tubulaire allongée (12) apte à entourer le col et munie, à la fois, de moyens (42) de retenue autour du col et d'un onglet extérieur de sollicitation (24) s'étendant sur seulement une portion périphérique (12A) de la jupe (12) et permettant d'ouvrir le bouchon, dans lequel
au moins à un niveau longitudinal de la jupe, on moule, conjointement avec la jupe, des renflements en saillie radiale vers l'intérieur depuis la paroi de la jupe de manière que la dimension radiale d'au moins un des renflements situé dans la portion périphérique (12A) de la jupe (12) associée à l'onglet (24) est plus petite que la dimension radiale d'au moins un autre des renflements situé en dehors de cette portion, **caractérisé en ce que,**
audit niveau longitudinal de la jupe, on découpe ensuite, sur sensiblement toute la périphérie de la jupe, une entaille (64') qui traverse la paroi de la jupe de part en part, sans découper les renflements, de manière que ces renflements forment des pontets frangibles (44A', 44B') reliant, avant la première ouverture du bouchon, une partie de jupe non amovible (12₂), munie des moyens de retenue (42), et une partie de jupe amovible (12₁) munie de l'onglet (24).

6. Procédé suivant la revendication 5, **caractérisé en ce que**, lors du moulage de la jupe (12), on utilise un noyau de moulage (50') qui, au niveau correspondant audit niveau longitudinal de la jupe, délimite sur sa surface extérieure (56') des cavités (59A', 59B') de moulage des renflements, la profondeur radiale de la ou des cavités (59A') situées dans la portion (52A') du noyau utilisée pour mouler la portion périphérique (12A) de la jupe (12) associée à l'onglet (24) étant plus petite que la profondeur radiale de la ou des cavités (59B') situées dans le reste (52B') du noyau.

7. Procédé suivant l'une des revendications 5 ou 6, **caractérisé en ce que** les pontets (44A', 44B') sont situés radialement à l'intérieur de l'enveloppe (34) délimitée par les surfaces intérieures des parties de jupe amovible (12₁) et non amovible (12₂), en reliant l'une à l'autre ces surfaces intérieures suivant la direction longitudinale (X-X) de la jupe (12) avant la première ouverture du bouchon (1).

8. Procédé suivant la revendication 7, **caractérisé en ce que**, au moins de part et d'autre de la ligne d'affaiblissement (40), la dimension radiale (e₁₂) de la jupe (12) est constante sur toute sa périphérie.

9. Procédé suivant l'une quelconque des revendications précédentes, **caractérisé en ce que** la dimension périphérique du ou des pontets (44A ; 44A') situés dans la portion périphérique (12A) de la jupe (12) associée à l'onglet (24) est plus petite que la dimension périphérique du ou des autres pontets (44B ; 44B').

10. Procédé suivant l'une quelconque des revendications précédentes, **caractérisé en ce que** la partie de jupe amovible (12₁) est munie de moyens intérieurs (30) de clipsage sur le col (2), qui sont adaptés pour fixer de manière amovible le bouchon (1) sur le col par coincement avec un bord saillant extérieur (5) du col et qui comprennent au moins un clips (30) situé, suivant la périphérie de la jupe (12), à l'opposé de la portion périphérique (12A) associée à l'onglet (24).

## Claims

1. A method of manufacturing a cap (1) for the neck of a container (2), in which method an elongate tubular skirt (12) able to surround the neck and equipped both with means (42) of returning it around the neck and with an external operating tab (24) extending over just a peripheral portion (12A) of the skirt and allowing the cap to be opened is molded,
wherein, at least at one longitudinal level of the skirt (12), the wall of the skirt is molded in such a way that the radial dimension (e_{12A}) of its peripheral portion (12A) associated with the tab (24) is smaller than the radial dimension (e_{12B}) of the remainder of the skirt (12B),
**characterized in that**, at said longitudinal level of the skirt, cuts (64) are then made through the wall of the skirt so as to delimit, around the periphery of the skirt, frangible bridges of which at least one (44A) is situated in the peripheral portion (12A) of the skirt associated with the tab while at least one other (44B) of the bridges is situated outside of this portion, which bridges, before the cap is first opened, connect a non-removable skirt part (12₂) equipped with the retaining means (42) to a removable skirt part (12₁) equipped with the tab (24).

2. The method as claimed in claim 1, **characterized in that**, when the skirt (12) is being molded, use is made of a molding insert (50) of which a portion (52A) used to mold the peripheral portion (12A) of the skirt (12) associated with the tab (24) delimits, in a transverse plane of section corresponding to said longitudinal level of the skirt, an exterior peripheral contour which exhibits a radius of curvature (r_{52A}) greater than the radius of curvature (r_{52B}) of the remainder (52B) of the insert.

3. The method as claimed in one of claims 1 or 2, **characterized in that** the bridges (44A, 44B) are situated radially between the envelope (20) delimited by the exterior surfaces of the removable (12₁) and non-removable (12₂) skirt parts and the envelope (34) delimited by the interior surfaces of the removable and non-removable skirt parts, connecting the opposing end edges (46₁, 46₂) of the removable and non-removable skirt parts together in the longitudinal direction (X-X) of the skirt (12) before the cap (1) is first opened.

4. The method as claimed in claim 3, **characterized in that**, at least on either side of the line of weakness (40), the radial dimension (e_{12A}, e_{12B}) of the skirt (12) varies around its periphery, being equal, at each bridge (44A, 44B), to the radial dimension (e_{44A}, e_{44B}) of this bridge.

5. A method of manufacturing a cap (1) for the neck of a container (2), in which method an elongate tubular skirt (12) able to surround the neck and equipped both with means (42) of returning it around the neck and with an external operating tab (24) extending over just a peripheral portion (12A) of the skirt (12) and allowing the cap to be opened is molded,
wherein, at least at one longitudinal level of the skirt, bulges projecting radially inward from the wall of the skirt are molded together with the skirt such that the radial dimension of at least one of the bulges situated in the peripheral portion (12A) of the skirt (12) associated with the tab (24) is smaller than the radial dimension of at least one other of the bulges situated outside of this portion,
**characterized in that**, at said longitudinal level of the skirt, a cut (64') which passes right through the wall of the skirt is then made over substantially the entire periphery of the skirt, without cutting through the bulges, so that these bulges form frangible bridges (44A', 44B') connecting a non-removable skirt part (12₂) equipped with the retaining means (42) to a removable skirt part (12₁) equipped with the tab (24) before the cap is first opened.

6. The method as claimed in claim 5, **characterized in that**, when molding the skirt (12), use is made of a molding insert (50') which, at the level corresponding to said longitudinal level of the skirt, delimits on the exterior surface (56') bulge-molding cavities (59A', 59B'), the radial depth of the cavity or cavities (59A') situated in the portion (52A') of the insert used for molding the peripheral portion (12A) of the skirt (12) associated with the tab (24) being smaller than the radial depth of the cavity or cavities (59B') situated in the remainder (52B') of the insert.

7. The method as claimed in one of claims 5 or 6, **characterized in that** the bridges (44A', 44B') are situated radially inside the envelope (34) delimited by the interior surfaces of the removable (12₁) and non-removable (12₂) skirt parts, connecting these interior surfaces together in the longitudinal direction (X-X) of the skirt (12) before the cap (1) is first opened.

8. The method as claimed in claim 7, **characterized in that**, at least on either side of the line of weakness (40), the radial dimension (e₁₂) of the skirt (12) is constant around its entire periphery.

9. The method as claimed in any one of the preceding claims, **characterized in that** the peripheral dimension of the bridge or bridges (44A; 44A') situated in the peripheral portion (12A) of the skirt (12) associated with the tab (24) is smaller than the peripheral dimension of the other bridge or bridges (44B; 44B').

10. The method as claimed in any one of the preceding claims, **characterized in that** the removable skirt part (12₁) is equipped with interior means (30) of clipping onto the neck (2), which are designed to secure the cap (1) removably to the neck by wedging against a protruding exterior edge (5) of the neck and which comprise at least one clip (30) situated, around the periphery of the skirt (12), opposite the peripheral portion (12A) associated with the tab (24).

## Patentansprüche

1. Verfahren zur Herstellung eines Stöpsels (1) für einen Behälterhals (2), bei dem eine längliche röhrenförmige Schürze (12) geformt wird, die den Hals umgeben kann und gleichzeitig mit Haltemitteln (42) um den Hals und einer äußeren Angriffskerbe (24) versehen ist, die sich auf nur einem Umfangsabschnitt (12A) der Schürze erstreckt und es ermöglicht, den Stöpsel zu öffnen, wobei mindestens auf einem Längsniveau der Schürze (12) die Wand der Schürze derart geformt wird, dass die Radialabmessung (e_{12A}) ihres Umfangsabschnitts (12A), der der Kerbe (24) zugeteilt ist, kleiner als die Radialabmessung (e_{12B}) der übrigen Schürze (12B) ist, **dadurch gekennzeichnet, dass** auf dem Längsniveau der Schürze sodann Einkerbungen (64) durch die Wand der Schürze geschnitten werden, um entlang der Peripherie der Schürze zerbrechbare Brücken zu bilden, von denen sich mindestens eine (44A) in dem der Angriffskerbe zugeordneten Umfangsabschnitt (12A) der Schürze befindet, während sich mindestens eine weitere (44B) der Brücken außerhalb dieses Abschnittes befindet, wobei die Brücken vor dem ersten Öffnen des Stöpsels einen nicht abnehmbaren Schürzenteil (12₂), der mit den Haltemitteln (42) versehen ist, und einen abnehmbaren Schürzenteil (12₁), der mit der Angriffskerbe (24) versehen ist, verbinden.

2. Verfahren nach Anspruch 1, **dadurch gekennzeichnet, dass** beim Formen der Schürze (12) ein Formkern (50) verwendet wird, dessen Abschnitt (52A), der für die Ausformung des der Angriffskerbe (24) zugeordneten Umfangsabschnitts (12A) der Schürze (12) verwendet wird, in einer Querschnittebene entsprechend dem Längsniveau der Schürze eine äußere Umfangskontur begrenzt, die einen größeren Krümmungsradius (r_{52A)}) als der Krümmungsradius (r_{52B}) des übrigen Kerns (52B) aufweist.

3. Verfahren nach einem der Ansprüche 1 oder 2, **dadurch gekennzeichnet, dass** die Brücken (44A, 44B) radial zwischen der Hülle (20), die von den Außenflächen des abnehmbaren (12₁) und nicht abnehmbaren Schürzenteils (12₂) begrenzt ist, und der Hülle (34), die von den Innenflächen des abnehmbaren und nicht abnehmbaren Schürzenteils begrenzt ist, angeordnet sind, wobei sie gegenüber liegende Endkanten (46₁, 46₂) der abnehmbaren und nicht abnehmbaren Schürzenteile in Längsrichtung (X-X) der Schürze (12) vor dem ersten Öffnen des Stöpsels (1) miteinander verbinden.

4. Verfahren nach Anspruch 3, **dadurch gekennzeichnet, dass** mindestens beiderseits der Schwächungslinie (40) die Radialabmessung (e_{12A}, e_{12B}) der Schürze (12) entlang ihrer Peripherie variiert, wobei sie im Bereich jeder Brücke (44A, 44B) gleich der Radialabmessung (e_{44A}, e_{44B}) dieser Brücke ist.

5. Verfahren zur Herstellung eines Stöpsels (1) für einen Behälterhals (2), bei dem eine längliche röhrenförmige Schürze (12) geformt wird, die den Hals umgeben kann und gleichzeitig mit Haltemitteln (42) um den Hals und einer äußeren Angriffskerbe (24) versehen ist, die sich auf nur einem Umfangsabschnitt (12A) der Schürze (12) erstreckt und es ermöglicht, den Stöpsel zu öffnen, wobei mindestens auf einem Längsniveau der Schürze gemeinsam mit der Schürze radial nach innen aus der Wand der Schürze vorspringende Verstärkungen geformt werden, so dass die Radialabmessung mindestens einer der Verstärkungen, die sich in dem mit der Angriffskerbe (24) verbundenen Umfangsabschnitt (12A) der Schürze (12) befindet, kleiner als die Radialabmessung mindestens einer weiteren der Verstärkungen, die sich außerhalb dieses Abschnitts befindet ist, **dadurch gekennzeichnet, dass** auf dem Längsniveau der Schürze sodann auf im Wesentlichen der gesamten Peripherie der Schürze eine Einkerbung (64'), die durch die Wand der Schürze beiderseits hindurchgeht, eingeschnitten wird, ohne die Verstärkungen einzuschneiden, so dass diese Verstärkungen zerbrechbare Brücken (44A', 44B') bilden, die vor dem ersten Öffnen des Stöpsels einen nicht abnehmbaren Schürzenteil (12₂), der mit Haltemitteln (42) versehen ist, und einen abnehmbaren Schürzenteil (12₁), der mit der Angriffskerbe (24) versehen ist, verbinden.

6. Verfahren nach Anspruch 5, **dadurch gekennzeichnet, dass** beim Formen der Schürze (12) ein Formkern (50') verwendet wird, der auf dem Niveau, das dem Längsniveau der Schürze entspricht, auf seiner Außenfläche (56') Formhohlräume (59A', 59B') der Verstärkungen begrenzt, wobei die radiale Tiefe des oder der Hohlräume (59A'), die sich in dem Abschnitt (52A') des Kerns befinden, der für die Formung des mit der Angriffskerbe (24) verbundenen Umfangsabschnitts (12A) der Schürze (12) verwendet wird, kleiner als die radiale Tiefe des oder der Hohlräume (59B') ist, die sich im übrigen Kern (52B') befinden.

7. Verfahren nach einem der Ansprüche 5 oder 6, **dadurch gekennzeichnet, dass** die Brücken (44A', 44B') radial innerhalb der Hülle (34) angeordnet sind, die von den Innenflächen der abnehmbaren (12₁) und nicht abnehmbaren Schürzenteile (12₂) begrenzt ist, wobei sie diese Innenflächen in Längsrichtung (X-X) der Schürze (12) vor dem ersten Öffnen des Stöpsels (1) verbinden.

8. Verfahren nach Anspruch 7, **dadurch gekennzeichnet, dass** mindestens beiderseits der Schwächungslinie (40) die Radialabmessung (e₁₂) der Schürze (12) auf ihrer gesamten Peripherie konstant ist.

9. Verfahren nach einem der vorhergehenden Ansprüche, **dadurch gekennzeichnet, dass** die Umfangsabmessung der Brücke(n) (44A, 44A'), die sich in dem mit der Angriffskerbe (24) verbundenen Umfangsabschnitt (12A) der Schürze (12) befinden, kleiner als die Umfangsabmessung der anderen Brücke(n) (44B, 44B') ist.

10. Verfahren nach einem der vorhergehenden Ansprüche, **dadurch gekennzeichnet, dass** der abnehmbare Schürzenteil (12₁) mit internen Mitteln (30) zum Clipsen auf den Hals (2) versehen ist, die dazu vorgesehen sind, den Stöpsel (1) abnehmbar auf dem Hals durch Einklemmen mit dem vorspringenden äußeren Rand (5) des Halses zu befestigen, und die mindestens ein Clips (30) umfassen, das sich entlang der Peripherie der Schürze (12) gegenüber dem der Angriffskerbe (24) zugeordneten Umfangsabschnitt (12A) befindet.
